## Europäisches Patentamt

## European Patent Office

## Office européen des brevets

(11) Numéro de publication: **0 202 989**
**B1**

## FASCICULE DE BREVET EUROPEEN

(45) Date de publication du fascicule du brevet:
07.02.90

(51) Int. Cl.⁴: **H04L 9/00**

(21) Numéro de dépôt: 86400923.8

(22) Date de dépôt: 25.04.86

(54) Dispositif de chiffrement par substitutions-permutations.

(30) Priorité: 15.05.85 FR 8507401

(43) Date de publication de la demande:
26.11.86 Bulletin 86/48

(45) Mention de la délivrance du brevet:
07.02.90 Bulletin 90/6

(84) Etats contractants désignés:
DE GB IT NL

(56) Documents cités:
US-A- 4 275 265

**PROCEEDINGS OF THE IEEE,**
**vol. 67, no. 3, mars 1979, pages 397-427, IEEE, New York,**
**US; W. DIFFIE et al.: "Privacy and authentication: An**
**introduction to cryptography"**

(73) Titulaire: **THOMSON-CSF, 51, Esplanade du Général de**
**Gaulle, F-92800 Puteaux(FR)**

(72) Inventeur: **Delahaye, Bernard, THOMSON CSF**
**SCPI 19, avenue de Messine, F-75008 Paris(FR)**
Inventeur: **Lebret, Alain, THOMSON CSF**
**SCPI 19, avenue de Messine, F-75008 Paris(FR)**

(74) Mandataire: **El Manouni, Josiane et al, THOMSON-CSF ·**
**SCPI, F-92045 PARIS LA DEFENSE CEDEX 67(FR)**

ACTORUM AG

## Description

La présente invention concerne un dispositif de chiffrement, apte à transformer un mot binaire de "n" bits en un autre mot binaire de "n" bits, par la méthode connue, dite de substitutions-permutations. Cette méthode consiste à effectuer, à partir du mot d'entrée, une suite d'opérations de substitution; consistant chacune à remplacer, sous le contrôle d'une clé, un mot de "m" bits (en général des sous-mots du mot d'entrée) par un autre mot de "m" bits, et de permutations qui consistent à permuter, suivant un schéma prédéfini, les bits d'un mot afin de former un nouveau mot de longueur égale.

Des exemples, de tels systèmes de chiffrement sont constitués par les systèmes connus sous l'appellation anglo-saxonne "Data Encryption Standard" ou encore par ceux qui sont par exemple décrits dans le brevet US 4 275 265 ou encore dans la publication "Proceedings" of IEEE Vol. 67 n°. 3, Mars 1979, pages 397 à 427 ayant pour titre "Privacy and authentication: An introduction to cryptography". Un inconvénient de ces systèmes consiste dans le fait que la loi de substitution est fixée une fois pour toutes, et que tous les utilisateurs utilisent donc le même algorithme de chiffrement, le seul paramètre variable d'un utilisateur à l'autre étant la clé.

Le fait que les lois de substitution soient fixes et connues présente deux types de vulnérabilité, la première vulnérabilité est que la connaissance de la clé suffit à déchiffrer un message, la seconde est que les substitutions étant fixes et non évolutives, il n'y a pas de limite de temps pour trouver, par des méthodes d'analyse mathématique ou statistique, d'éventuelles faiblesses facilitant le déchiffrement.

Par ailleurs les dispositifs de chiffrement existant actuellement s'appliquent à des mots et à des clés de longueur bien déterminée, mais manquent de souplesse pour une utilisation avec des mots ou avec des clés de longueur différente.

La présente invention a pour objet un dispositif de chiffrement présentant une plus grande souplesse d'utilisation, tant vis-à-vis de ses possibilités d'application (incluant notamment une personnalisation de l'algorithme de chiffrement) que vis-à-vis du format des mots auquel il s'applique.

La présente invention a également pour objet un dispositif dont la structure est adaptable en fonction de critères choisis tels que rapidité ou compacité.

La présente invention a également pour objet un dispositif de chiffrement qui est en même temps reversible, c'est-à-dire utilisable sans aucune modification à l'émission comme à la réception.

La présente invention a pour objet un dispositif de chiffrement, apte à transformer un mot binaire en un autre mot binaire par une suite de substitutions et de permutations, sous la commande d'une clé, essentiellement caractérisé en ce que les opérations de substitution sont réalisées au moyen d'une ou plusieurs mémoires programmables ou reprogrammables adressées par tout ou partie du mot devant subir une substitution, et par tout ou partie de la clé, ou de parties de la clé appliquées successivement.

Les objets et caractéristiques de la présente invention apparaîtront plus clairement à la lecture de la description suivante d'exemples de réalisation, faite en relation avec les dessins ci-annexés dans lesquels :

- la figure 1 est un schéma synoptique d'un dispositif de chiffrement suivant l'invention ;
- la figure 2 est une variante de ce schéma ;
- la figure 3 est un schéma de réalisation correspondant au schéma synoptique de la figure 2 ;
- la figure 4 est un diagramme explicatif de l'opération de substitution ;
- la figure 5 montre le schéma utilisé pour réaliser l'opération de permutation ;
- la figure 6 montre le schéma utilisé pour réaliser les opérations de permutation initiale et finale ;
- la figure 7 représente schématiquement un exemple d'application d'un dispositif suivant l'invention ;
- la figure 8 est un schéma d'une autre variante de réalisation du dispositif.

A titre d'exemple la description qui suit est faite pour un mot d'entrée de 32 bits et pour une clé de 64 bits. Mais il faut souligner que le principe de l'invention est général et indépendant des valeurs numériques choisies. Pour des mots d'entrée de longueur plus importante, le dispositif de chiffrement se déduirait de celui décrit ciaprès par adjonction de dispositifs identiques. Pour des mots d'entrée plus courts, le dispositif décrit ci-après est directement utilisable, par un simple choix particulier des substitutions, comme on le verra ultérieurement. De même, pour des longueurs de clé différentes, le dispositif de chiffrement se déduirait de celui décrit ci-après par une modification mineure du séquenceur.

De même le principe général est indépendant de la taille des mémoires de substitution, ou du découpage éventuel du mot d'entrée et de la clé en plusieurs tronçons d'éléments binaires, l'ensemble de ces paramètres déterminant en particulier les conditions d'application du mot devant subir une substitution, et de la clé, aux mémoires de substitution, le nombre de mémoires de substitution, ou le nombre de suites de substitutions-permutations à effectuer successivement.

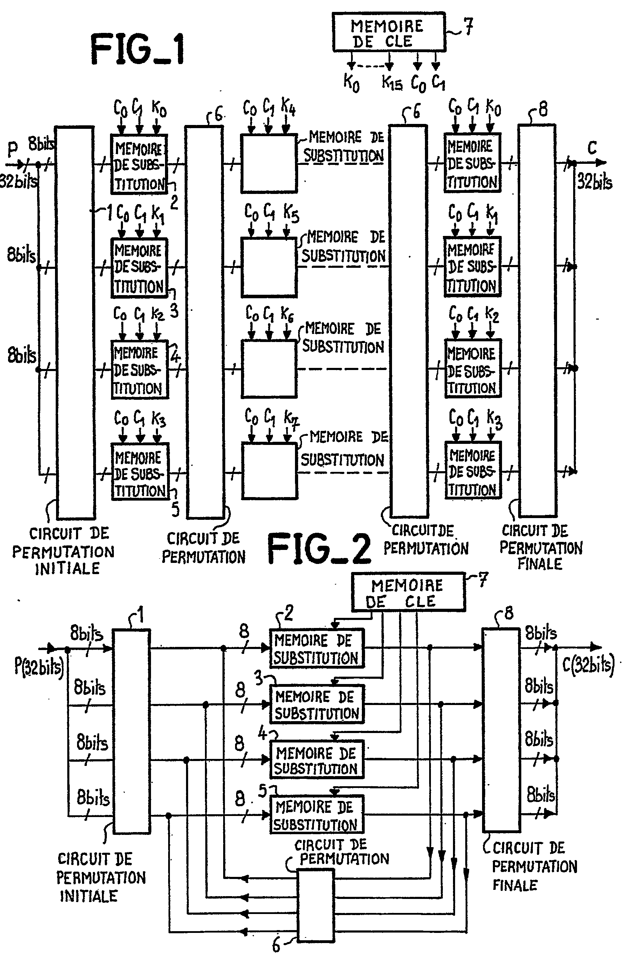

Le principe général est décrit à la figure 1. Le mot d'entrée de 32 bits est découpé en quatre tronçons de 8 bits. Le mot subit d'abord une permutation initiale $T_0$ dans un circuit de permutation initiale 1 (décrit ultérieurement) qui a pour rôle de permettre l'adaptation du dispositif à des longueurs de mots d'entrée inférieures. Puis chaque bloc de 8 bits subit une substitution, dans une mémoire dite de substitution (2, 3, 4, 5) qui le transforme en un autre mot de 8 bits. Cette substitution est assurée par une table aléatoire, comme on le verra plus loin, et est reversible, c'est-à-dire qu' à tout mot de 8 bits de l'ensemble de 256 mots de 8 bits présentés à l'entrée, correspond un et un seul mot de 8 bits en sortie et qu' à deux mots différents à l'entrée correspondent des mots substitués en sortie qui sont différents. Le choix de tables aléatoires n'est pas une absolue nécessité mais correspond à une meilleure qualité du chiffrement. Les substitutions pour chaque bloc de 8 bits sont différentes et contrôlées d'une part par une partie Ki telle que définie ci-après de la clé proprement dite, d'autre part par des bits de contrôle ($C_0$, $C_1$) qui constituent en fait un complément de clé ou clé auxiliaire.

La clé de 64 bits est emmagasinée dans une mémoire (7), dite mémoire de clé, sous la forme de 16 tronçons de 4 bits qui sont notés :

$$K_0 = k_0 \, k_1 \, k_2 \, k_3$$

$$K_1 = k_4 \, k_5 \, k_6 \, k_7 \qquad \text{avec } k_i = 0 \text{ ou } 1$$

$$\vdots$$

$$K_{15} = k_{60} \, k_{61} \, k_{62} \, k_{63}$$

Les substitutions appliquées aux différents blocs de 8 bits sont des bijections de l'ensemble à 256 éléments de la forme $pn = \alpha_0 \, \alpha_1 \ldots \alpha_7$ ($\alpha_i = 0$ ou 1 ; $0 \leq n \leq 255$) sur lui-même. Ces substitutions sont appelées $s^i_{Kj}$, i étant le rang du bloc de 8 bits sur lequel s'applique la substitution (i compris entre 1 et 4) et Kj étant la valeur du tronçon de la clé (une des 16 valeurs possibles entre 0000 et 1111).

A partir d'un bloc d'entrée pn de 8 bits, on peut donc obtenir un bloc de sortie de 8 bits $Cn = s^i_{Kj} \, pn$. On appele

$$s^{(-1)i}_{Kj}$$

la substitution inverse de $s^i_{Kj}$, c'est-à-dire la bijection qui est définie par :

$$pn = s^{(-1)i}_{Kj} \times Cn$$

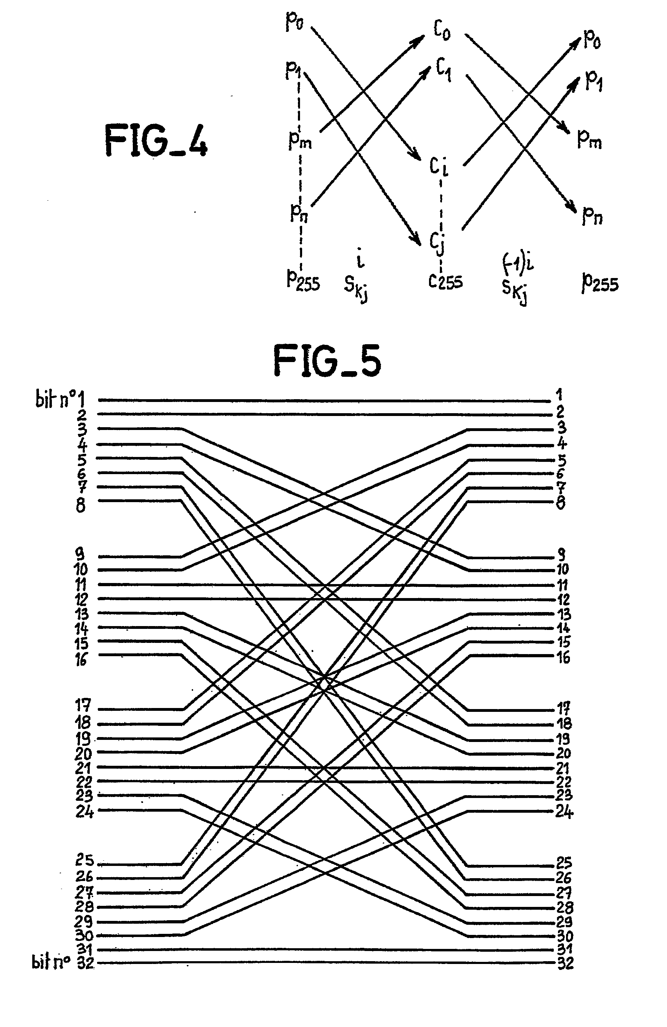

Les éléments ainsi définis apparaissent sur le diagramme explicatif de la figure 4.
L'ensemble de quatre substitutions

$$s^1_{Kj}, \quad s^2_{Kj+1}, \quad s^3_{Kj+2}, \quad s^4_{Kj+3}$$

telles que définies ci-dessus constitue une substitution globale d'un mot de 32 bits par un autre mot de 32 bits. Cette dernière substitution est notée Sk et correspond à l'utilisation de 16 bits de clés (Kj, Kj+1, Kj+2, Kj+3). Si la clé de 64 bits est divisée en quatre tronçons de 16 bits, on peut donc noter les substitutions correspondantes $S_{k1}$, $S_{k2}$, $S_{k3}$, $S_{k4}$.

Après avoir été transformé par substitution, le mot subit une nouvelle permutation $T_1$ (différente de la permutation initiale $T_0$) dans un circuit de permutation 6 (décrit ultérieurement) c'est-à-dire un échange de la place de ses bits, de façon à obtenir un nouveau mot de 32 bits. Cette permutation est homogène, c'est-à-dire que les bits issus de chaque octet sont répartis uniformément sur les quatre octets après permutation. Cette permutation est également réciproque, c'est-à-dire que l'on a

$$T_1 = T_1^{-1}.$$

Le choix d'une permutation homogène n'est pas obligatoire mais permet d'obtenir une meilleure qualité du chiffrement, de même que le choix de la réciprocité n'est pas obligatoire mais permet d'utiliser le même dispositif par le chiffrement et le déchiffrement.

Sur le mot obtenu après permutation est effectuée une nouvelle substitution avec un tronçon différent de 16 bits de clé, puis une nouvelle permutation $T_1$ et ainsi de suite.

Un séquenceur, non représenté sur la figure, permet de contrôler le déroulement des opérations et de choisir pour chaque opération de substitution le tronçon de clé de 16 bits correspondant. Lorsque les quatre tronçons de clés de 16 bits chacun : $K'_0 = (K_0, K_1, K_2, K_3)$, $K'_1 = (K_4, K_5, K_6, K_7)$, $K'_2 = (K_8, K_9, K_{10},$

$K_{11}$) et $K'_3$ = ($K_{12}$, $K_{13}$, $K_{14}$, $K_{15}$) ont été utilisés une fois, dans une première suite de quatre substitutions-permutations, ils sont à nouveau utilisés une seconde fois dans une deuxième suite de quatre substitutions-permutations, pour accroître la diffusion des bits de clé dans le mot chiffré, et dans un ordre inverse et symétrique, ce qui permet d'utiliser le même séquencement de tronçons de clé pour réaliser l'opération de chiffrement ou son inverse, sans avoir besoin d'inverser ce séquencement.

A l'issue de la dernière substitution, a lieu une permutation finale $T_0$ identique à la permutation initiale 1 et ayant la même fonction, dans un circuit de permutation finale 8. Le mot de 32 bits obtenu à l'issue de cette permutation constitue le mot de sortie C du dispositif de chiffrement. L'ensemble des opérations, ou algorithme de chiffrement, se présente donc comme une suite de permutations et de substitutions, et on peut écrire :

$$C = T_0 \, S_{k1} \, T_1 \, S_{k2} \, T_1 \, S_{k3} \, T_1 \, S_{k4} \, T_1 \, S_{k4} \, T_1 \, S_{k3} \, T_1 \, S_{k2} \, T_1 \, S_{k1} \, T_0 \, P$$

D'après cette écriture, le mot d'entrée de 32 bits P subit d'abord la permutation $T_0$, puis la substitution $S_{k1}$ puis la permutation $T_1$, puis la substitution $S_{k2}$ et ainsi de suite jusqu'à la permutation finale $T_0$. Le mot final obtenu est le mot C.

L'opération inverse est obtenue en faisant l'opération inverse, c'est-à-dire :

$$P = T_0 \, S_{k1}^{-1} \, T_1 \, S_{k2}^{-1} \, T_1 \, S_{k3}^{-1} \, T_1 \, S_{k4}^{-1} \, T_1 \, S_{k4}^{-1} \, T_1 \, S_{k3}^{-1} \, T_1 \, S_{k2}^{-1} \, T_1 \, S_{k1}^{-1} \, T_0 \, C$$

En effet, l'application successive de deux permutations $T_0$ ou de deux permutations $T_1$ donne l'opération identité et il en est de même de

$$S_{ki}^{-1}$$

appliquée après $S_{ki}$.

L'utilisation de mémoires pour le stockage des tables de substitution, et notamment de mémoires reprogrammables à 32 kilo octets, permet de stocker non seulement les seize tables de substitutions par octet nécessaires pour mettre en oeuvre, par octet, l'algorithme de chiffrement, mais aussi les tables de substitution inverse nécessaires pour mettre en oeuvre l'algorithme inverse (le choix entre algorithme et algorithme inverse s'effectuant par l'intermédiaire d'un bit de contrôle $C_0$) et permet également de stocker plusieurs jeux de tables de substitution, par exemple quatre dans l'exemple considéré (le choix d'un ensemble donné s'effectuant par l'intermédiaire de bits de contrôle $C_1$, au nombre de deux dans l'exemple considéré).

On peut citer à titre d'exemple deux cas particulièrement intéressants d'utilisation des bits de contrôle $C_1$.

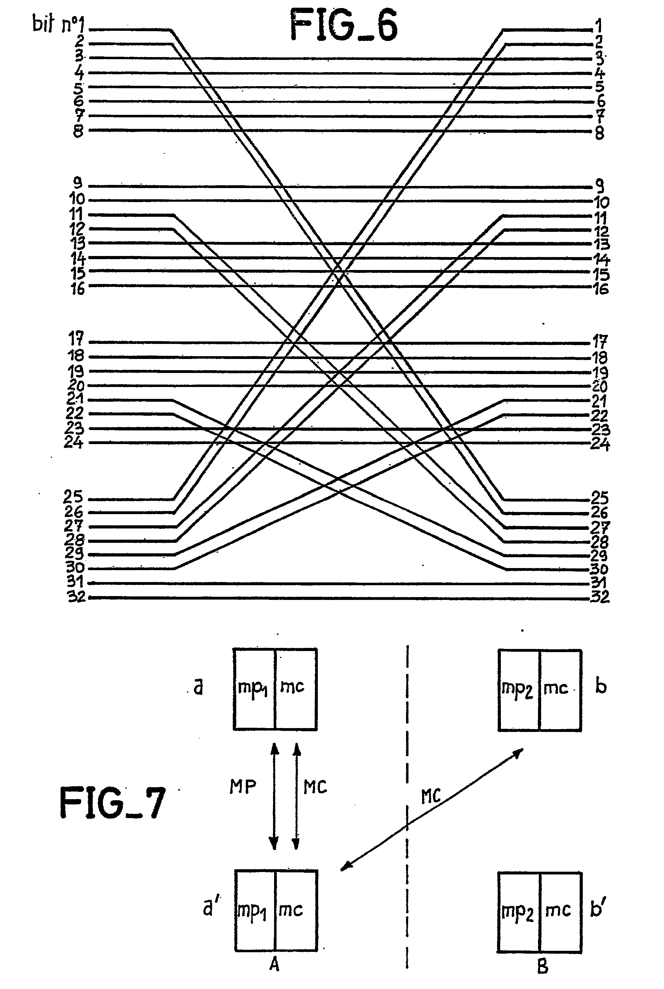

Un premier exemple est l'utilisation du dispositif suivant un mode commun MC, tout en gardant l'utilisation d'un mode personnel MP. Cet exemple est illustré sur la figure 7.

Soient A et B deux utilisateurs du même dispositif, chaque utilisateur étant constitué de deux ou plusieurs éléments, respectivement a et a', b et b' entre lesquels s'effectuent des échanges d'information. Si ces utilisateurs sont susceptibles de travailler un jour en commun, ils constituent ensemble un jeu commun "mc" de tables de substitution. Chacun complète ses mémoires de substitution avec un jeu qui lui est propre, respectivement "mp$_1$" et "mp$_2$". En temps normal, chaque utilisateur gère sa propre clé, et aucune information ne peut s'échanger entre les éléments de A et les éléments de B. Si une décision d'échange est prise, les deux utilisateurs pourront dialoguer en utilisant la même clé et en sélectionnant, à l'aide du bit de contrôle $C_1$, le jeu commun de tables de substitution. Bien qu'utilisant la clé commune, chaque utilisateur peut cependant conserver des échanges secrets, en utilisant alors son propre jeu de tables, sur simple commutation du bit de contrôle $C_1$.

Un autre exemple consiste à faire évoluer dans le temps le contenu des mémoires de substitution, permettant ainsi de faire évoluer de façon permanente l'algorithme et rendant nettement plus difficile la tâche d'un éventuel adversaire. En effet, la possession de l'algorithme et de la clé est nécessaire à l'adversaire pour pouvoir déchiffrer les échanges d'information. En général, l'algorithme est fixe et connu, ou tout au moins est susceptible de l'être au bout d'un temps plus ou moins long. Il suffit alors à l'adversaire d'obtenir la clé en usage à un instant déterminé, ce qui présente d'autant plus de possibilités que sa diffusion est plus générale. Si l'algorithme évolue dans le temps, la difficulté s'accroît.

Dans cette optique, la possibilité de sélectionner un autre jeu de mémoires de substitution peut être utilisée pour masquer les périodes transitoires de changement de contenu du jeu précédemment utilisé, en particulier en présence de nombreux utilisateurs. La méthode consiste alors à travailler alternativement avec deux jeux de tables. Un premier jeu est le jeu en usage, le second jeu est le jeu en cours de modification. Lorsque tous les équipements ont été modifiés, en change le rôle respectif des jeux de tables.

Le schéma synoptique représenté sur la figure 2 ne diffère de celui représenté sur la figure 1 que par le fait que le système est rebouclé sur lui-même, les mots obtenus après les différentes permutations se présentant alors successivement à l'entrée d'un unique ensemble de quatre mémoires de substitution pour y subir les différentes substitutions, et les différents tronçons de clé étant alors successivement appliqués à ces mémoires dans l'ordre exposé précédemment. Ce schéma a l'avantage de présenter une plus grande compacité, le schéma précédent ayant l'avantage d'une plus grande rapidité.

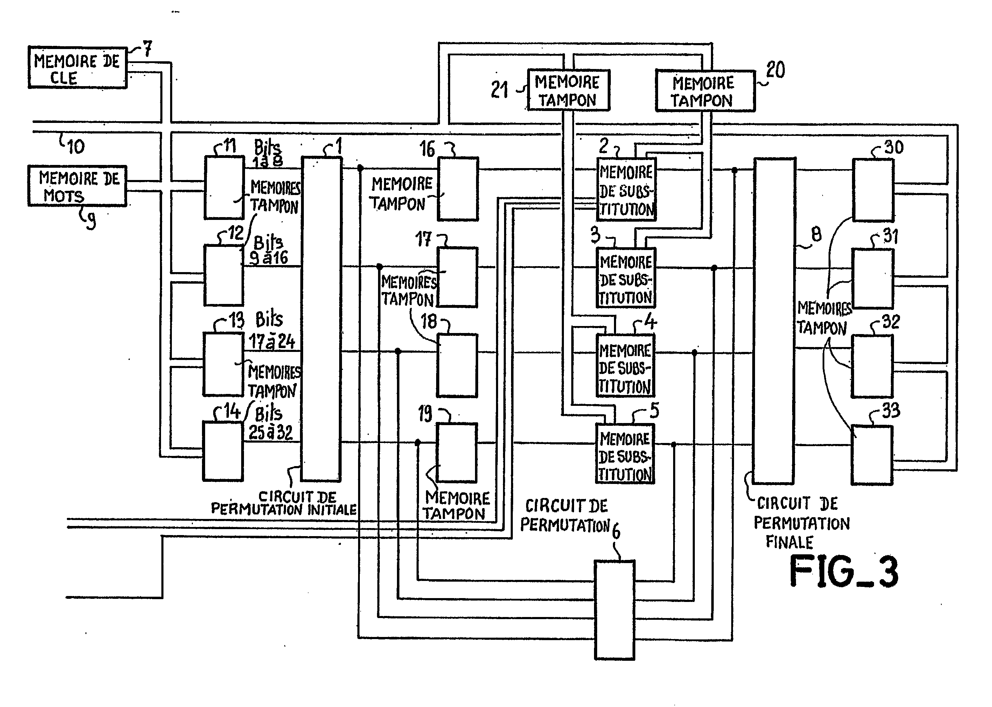

Sur la figure 3 on a représenté un schéma de réalisation correspondant au schéma synoptique de la figure 2.

Ce schéma est limité au coeur du système ; en particulier n'y figurent ni le séquenceur qui permet d'ordonner la succession des opérations effectuées, ni l'adressage des mémoires de clé et des mémoires de mots ; ces éléments se déduisent cependant de la description.

Le système comprend tout d'abord une mémoire de mot (9) reliée à une ligne de donnée (10) de 8 bits, mémoire dans laquelle on a chargé précédemment le mot de 32 bits à convertir. Le système comprend également une mémoire de clé (7) reliée à la même ligne de donnée (10) et dans laquelle la clé a été chargée. Les mémoires de mots et de clé sont représentées comme deux éléments différents mais peuvent être regroupées dans le même composant.

Dans un premier temps, et sous contrôle d'un séquenceur (non représenté), le mot à chiffrer est chargé, par sous-blocs de 8 bits, dans des mémoires tampons communément appelées "latch" (11, 12, 13, 14). Ensuite le mot de 32 bits subit la permutation initiale $T_0$ dans le circuit 1. Cette permutation est réalisée par câblage suivant le schéma de la figure 6 qui sera décrit ultérieurement. Les quatre sous-blocs de 8 bits issus de cette permutation chargent une deuxième série de quatre mémoires-tampons (16, 17, 18, 19).

Pendant ce temps, le séquenceur a chargé le premier tronçon $K'_0$ de 16 bits de clé ($K_0$, $K_1$, $K_2$, $K_3$) de la façon suivante : le premier octet de la clé ($K_0$, $K_1$) a été chargé dans une mémoire tampon 20 et le second octet de la clé ($K_2$, $K_3$) a été chargé dans une mémoire tampon 21.

Les quatre premiers bits $K_0$ de la clé sont appliqués sur la mémoire de substitution 2, les quatre suivants $K_1$ sur la mémoire de substitution 3, les quatre suivants $K_2$ sur la mémoire de substitution 4, et les quatre suivants $K_3$ sur la mémoire de substitution 5. Les mémoires de substitution 2, 3, 4, 5 sont à titre d'exemple des mémoires reprogrammables de capacité 32 K octets. Les 15 bits d'adresse de ces mémoires de substitution sont constitués par les 8 bits du mot d'entrée, les 4 bits de la partie de la clé Ki qui s'y applique et 3 bits de contrôle $C_0$ et $C_1$, obtenus respectivement sur deux lignes 26 et 27. Un des bits de contrôle $C_0$ est réservé, comme on l'a vu, à la sélection entre l'algorithme de chiffrement et son inverse. Les deux autres bits de contrôle $C_1$ permettent de choisir un jeu de tables parmi quatre disponibles. Le tirage du contenu des tables de substitution fait l'objet d'un développement ultérieur. Les mots de 8 bits issus des tables de substitutions et regroupés en un mot de 32 bits subissent ensuite une permutation dans le circuit 6, par câblage conformément à la figure 5 décrite ultérieurement. Le mot permuté est à nouveau chargé dans les mémoires tampon 16, 17, 18, 19. Le tronçon suivant, $K'_1$, de 16 bits de clé ($K_4$, $K_5$, $K_6$, $K_7$) est alors chargé dans les mémoires tampon 20 (pour ce qui est du premier octet $K_4$, $K_5$) et 21 (pour ce qui est du second octet $K_6$, $K_7$). Puis les bits $K_4$ sont appliqués à la mémoire de substitution 2 et ainsi de suite jusqu'aux bits $K_7$ qui sont appliqués à la mémoire de substitution 5. Après une nouvelle substitution sous le contrôle de ces bits de clé, une nouvelle permutation a lieu, et ainsi de suite.

Après application des bits de clés $K_{12}$ à $K_{14}$ et permutation, une nouvelle substitution a lieu avec à nouveau les bits $K_{12}$ à $K_{14}$, suivie d'une permutation-substitution avec les bits $K_8$ à $K_{11}$ et ainsi de suite.

Lorsque les bits de clé $K_0$ à $K_3$ ont été appliqués, le mot résultant subit une permutation finale dans un circuit 8 conforme à la figure 3, puis est chargé dans des mémoires-tampon de sortie 30, 31, 32, 33. Ces mémoires-tampon sont reliées au bus de donnée 10, ce qui permet le chargement de la mémoire de mots 9 par le mot ainsi obtenu. Cette mémoire peut ensuite être lue via le même bus de donnée (10) par un système extérieur à ce dispositif.

On décrit maintenant le choix du contenu des tables de substitution. Dans le cas général, les tables de substitution sont choisies de façon aléatoire sur l'ensemble des 256 octets possibles. Dans ce cas, la constitution d'une table se fait de la façon suivante.

Pour le premier octet (valeur 0000 0000) on fait un tirage aléatoire d'un nombre parmi 256 de valeur comprise entre 0 et 255. La valeur binaire de ce nombre est l'octet à substituer à l'octet 0000 0000. Pour le second octet, on fait un tirage aléatoire d'un nombre parmi les 255 restants, après élimination du résultat du premier tirage et ainsi de suite jusqu'au dernier octet (valeur 1111 1111) auquel on fait correspondre le seul octet restant après élimination des 255 déjà tirés.

La table inverse se déduit immédiatement de la table ainsi décrite en établissant les correspondances inverses.

Chaque mémoire est chargée avec quatre jeux de seize tables et de leurs inverses.

On notera qu'il existe 256! façon de choisir une table. Dans l'exemple de réalisation de la figure 3, où il y a quatre mémoires, chacune contenant 16 tables et leurs inverses (pour la même valeur des bits de contrôle), le jeu de tables contient donc 64 tables avec leurs inverses et la probabilité que deux utilisateurs tombent par hasard sur la même programmation est très faible puisqu'elle est de 1/(256!)64.

On décrit maintenant le fonctionnement du dispositif pour permettre le chiffrement de mots de longueur inférieure. Un exemple appliqué à un mot de 28 bits permettra de comprendre immédiatement le fonctionnement.

Dans une première opération effectuée hors du dispositif, le mot de 28 bits est complété à 32 bits par quatre zéros en position 29, 30, 31 et 32.

Dans la permutation $T_0$, les zéros se retrouvent en position 21, 22 et 31, 32 (voir figure 6).

Le choix des tables de substitution des deux premières mémoires 2 et 3 se fait de la façon décrite au paragraphe précédent, sans restriction.

Pour les tables de substitutions des deux dernières mémoires, 4 et 5, la contrainte que l'on se fixe est de conserver les deux zéros à la même position. Pour ce faire les 256 mots d'entrée sont divisés en deux ensembles. Un premier sous-ensemble de 64 mots correspond aux mots ayant deux zéros aux positions 21 et 22, pour la troisième mémoire 31, et 32 pour la dernière. Un deuxième sous-ensemble correspond aux 192 mots restants. Les substitutions sont choisies de façon aléatoire mais en restant dans le sous-ensemble du mot présenté à l'entrée de la table.

Pour deux zéros à l'entrée aux positions définies précédemment, on retrouve donc toujours deux zéros à la sortie. La permutation $T_1$ de la figure 5 conserve également la place de ces zéros (du fait de la conservation des bits de rang 21, 22 et 31, 32 par cette permutation), et ainsi de suite jusqu'à la dernière substitution.

La permutation finale $T_0$ de la figure 3 rétablit les quatre zéros à leur position d'origine du fait du caractère reversible de cette opération. Il suffit alors, dans le système extérieur au dispositif, de ne retenir que les 28 premiers bits correspondant au mot chiffré.

Le principe illustré par cet exemple s'applique sans difficulté à tous les mots dont la longueur est comprise entre 24 et 32 bits.

On notera de même que le dispositif peut fonctionner sans modification sur plusieurs longueurs de mots différentes, l'utilisation de bits de contrôle permettant le choix d'un jeu de tables adapté à la longueur du mot.

Des variantes évidentes peuvent être déduites pour une gamme de longueur de mots différentes en choisissant un dispositif avec des permutations adaptées à cette contrainte, et lors de la programmation des mémoires de substitution, des jeux de tables adaptées à la longueur du mot à chiffrer. Cependant, on notera que la permutation $T_1$ doit être le plus homogène possible, pour permettre une meilleure diffusion de l'information.

En effet, lorsque le mot d'entrée est découpé en plusieurs groupes d'éléments binaires sur lesquels sont ensuite effectuées des opérations de substitution distinctes, la permutation $T_1$ doit être le plus homogène possible, pour permettre une meilleure diffusion de l'information. Ainsi, si un bit change en entrée d'une mémoire de substitution, tous les bits de sortie de cette mémoire ont une probabilité identique de changer. Il faut alors que cette probabilité se retrouve le mieux répartie possible après permutation. Le schéma de la figure 5 correspond à une possibilité d'obtenir un tel résultat. Ce schéma est par ailleurs reversible, c'est-à-dire qu'à un bit de rang n en entrée correspond un bit de rang m en sortie, et inversement.

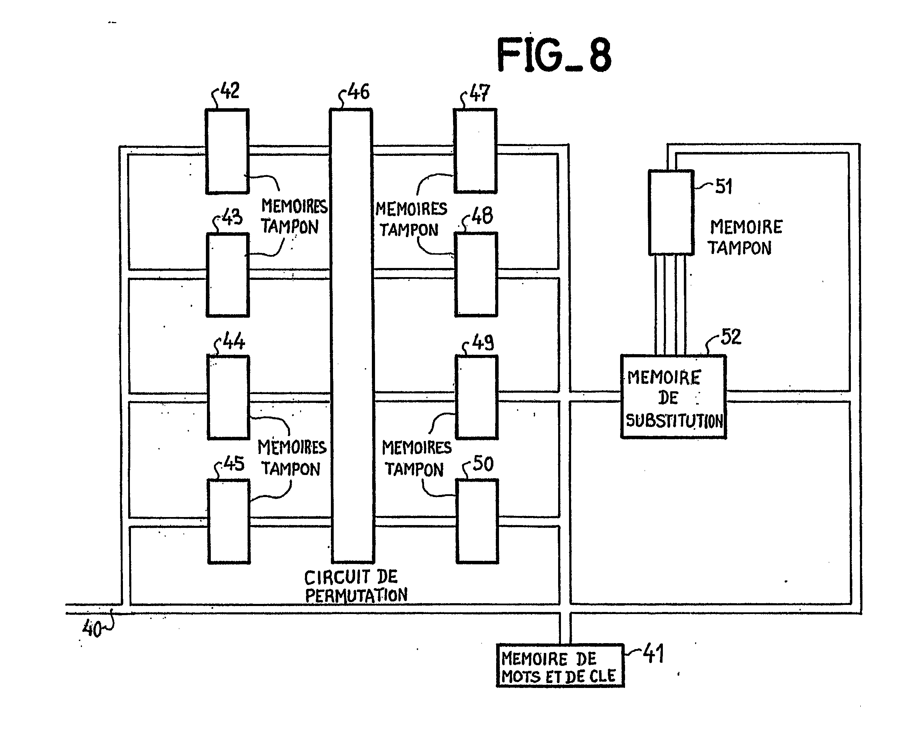

Un autre exemple de réalisation, utilisant une seule mémoire de substitution est maintenant décrit. Il est illustré par la figure 8. Il diffère du montage précédent en ce sens que :

- les mémoires de mots et de clés sont regroupées dans un même composant ;
- il n'y a pas de permutation initiale ni finale $T_0$ ;
- suivant le fonctionnement du séquenceur, on peut indifféremment commencer par une substitution ou par une permutation ;
- et surtout les substitutions se font successivement sur les différents octets et non plus simultanément.

Le fonctionnement est le suivant. Le mot en clair et les clés sont chargés à l'aide de la ligne de données 40 dans la mémoire 41. Puis le mot est chargé dans les quatre mémoires-tampon 42 à 45, subit la permutation $T_1$ dans un circuit de permutation 46 et est emmagasiné dans quatre mémoires-tampon 47 à 50. Le premier tronçon de clé $K_0$ est chargé dans une mémoire tampon 51. Le premier octet issu de la mémoire tampon 47 subit la substitution puis est stocké dans la mémoire tampon 42. Ensuite le deuxième tronçon de clé $K_1$ est chargé dans la mémoire-tampon 51 et le deuxième octet issu de la mémoire-tampon 48 subit la substitution et est stocké dans la mémoire-tampon 43.

La substitution partant sur le deuxième octet peut utiliser la même table que la substitution portant sur le premier octet, ou, dans des variantes du dispositif, une table différente en utilisant des bits supplémentaires d'adresse de la mémoire de substitution 52 contrôlés par le séquenceur.

Lorsque les quatre octets ont subi la substitution et sont chargés dans les mémoires-tampon 42 à 45, le mot de 32 bits ainsi obtenu subit à nouveau la permutation et ainsi de suite.

Après la dernière permutation, les octets disponibles dans les mémoires-tampon 47 à 50 sont chargés dans la mémoire de mots 41.

Bien que les principes de la présente invention aient été décrits ci-dessus en relation avec des exemples particuliers de réalisation, on comprendra clairement que ladite description est faite seulement à titre d'exemple et ne limite pas la portée de l'invention. Parmi les nombreuses variantes qui pourraient être apportées au dispositif ainsi décrit, sans sortir du cadre de la présente invention, on peut citer à titre d'exemple ;

- la possibilité de ne pas appliquer la clé directement aux mémoires de substitution mais après un traitement préalable ;

- la possibilité de changer l'ordre des opérations (permutations-substitutions au lieu de substitutions-permutations) ou d'effectuer certaines opérations (substitutions et/ou permutations) en plusieurs étapes ;
- la possibilité de faire un système intermédiaire entre la version bouclée de la figure 2 et la version éclatée de la figure 1 ;
- la possibilité d'effectuer un nombre quelconque de suites de substitutions-permutations, éventuellement non symétriques ;
- la possibilité de ne pas effectuer de permutation initiale et finale.

De même la définition des moyens de réalisation des opérations de substitution suivant l'invention, peut recouvrir toutes les variantes possibles entre les cas "extrêmes" suivants :
- réalisation de l'opération de substitution avec une seule mémoire, adressée par le mot à chiffrer et par la clé dans leur totalité ;
- réalisation de l'opération de substitution avec plusieurs mémoires, adressées respectivement par des parties du mot à chiffrer et par des parties de parties de la clé appliquées successivement, soit dans le cadre d'un système éclaté tel que celui de la figure 1, soit dans le cadre d'un système bouclé tel que celui de la figure 2.

## Revendications

1. Dispositif de chiffrement par substitutions-permutations apte à transformer un mot binaire (p) en un autre mot binaire (c) par une suite de substitutions et de permutations, sous la commande d'une clé (K), dans laquelle les opérations de substitution sont réalisées au moyen d'une ou plusieurs mémoires programmables ou reprogrammables (2, 3, 4, 5) adressées par tout ou partie du mot devant subir une substitution, et par tout ou partie de la clé ou de parties de la clé appliquée successivement, caractérisé en ce qu'il comporte en outre des moyens pour permettre l'utilisation du dispositif pour des mots de longueur inférieure à celle normalement prévue, en complétant ce mot avec des zéros et en assurant, au moyen d'une permutation initiale et d'une permutation finale ($T_0$), une distribution de ces zéros sur des positions d'éléments binaires qui sont conservées par les opérations de permutation et de substitution.

2. Dispositif selon la revendication 1, caractérisé en ce que l'opération de permutation est réalisée au moyen d'un câblage assurant une répartition homogène de l'ensemble des éléments binaires d'un groupe d'entrée sur l'ensemble des groupes de sortie.

3. Dispositif selon l'une quelconque des revendications 1 et 2, caractérisé en ce que les mémoires de substitution sont constituées en tables de substitution correspondant elles-mêmes chacune à une valeur donnée de la clé appliquée à cette mémoire.

4. Dispositif selon la revendication 3, caractérisé en ce que chaque mémoire de substitution comporte, pour une valeur donnée de la clé appliquée à cette mémoire, plusieurs tables de substitution, entre lesquelles le choix est assuré par un adressage supplémentaire au moyen d'une clé auxiliaire ($C_0$, $C_1$).

5. Dispositif selon la revendication 4, caractérisé en ce que chaque mémoire de substitution comporte notamment, pour une valeur donnée de la clé appliquée à cette mémoire, deux tables de substitution donnant l'une un algorithme de substitution, l'autre son inverse.

6. Dispositif selon l'une des revendications 1 à 5, caractérisé en ce que la totalité de la clé est appliquée plusieurs fois, au cours de plusieurs suites successives de substitutions et de permutations.

7. Dispositif selon la revendication 6, caractérisé en ce que la suite résultante présente une symétrie.

8. Dispositif selon la revendication 2, caractérisé en ce que le schéma correspondant à ce câblage est reversible.

9. Dispositif selon l'une quelconque des revendications 1 à 8, caractérisé en ce que les mémoires de substitution sont chargées de façon aléatoire.

## Claims

1. An enciphering device using substitutions and permutations, capable of transforming a binary word (p) into another binary word (c) by means of a sequence of substitutions and permutations under the control of a key (K), in which the operations of substitution are carried out by means of one or more programmable or reprogrammable storages (2, 3, 4, 5), which are addressed by the entirety or by part of the word to be subjected to substitutions, and by the entirety or by part of the key or by parts of the key successively applied, characterized in that the device further comprises means adapted to allow for using the device in case of words having a length which is shorter than the one normally provided for, by completing this word by zeros and by providing for a distribution of said zeros across binary element positions preserved by the operations of substitution and permutation by means of an initial permutation and of a final permutation ($T_0$).

2. A device according to claim 1, characterized in that the permutation operation is carried out by means of a hard-wiring which ensures a homogeneous distribution of all of the binary elements in an input group across all of the output groups.

3. A device according any one of claims 1 and 2, characterized in that the substitution storages are constituted of substitution tables, each corresponding to a given value of the key applied to said storage.

4. A device according to claim 3, characterized in that for a given value of the key applied to said storage, each substitution storage comprises several substitution tables among which the choice is ensured via a supplementary addressing by means of an auxiliary key ($C_0$, $C_1$).

5. A device according to claim 4, characterized in that each substitution storage notably comprises two substitution tables, for a given value of the key applied to said storage, one table providing an algorithm of substitution, the other the inverse version thereof.

6. A device according to one of the claims 1 to 5, characterized in that the entirety of the key is applied several times during several successive sequences of substitutions and permutations.

7. A device according to claim 6, characterized in that the resulting sequence presents a symmetry.

8. A device according to claim 2, characterized in that the wiring scheme is reversible.

9. A device according to anyone of the claims 1 to 8, characterized in that the substitution storages are randomly loaded.

**Patentansprüche**

1. Einrichtung zur Verschlüsselung durch Substitutionen und Permutationen, die in der Lage ist, aufgrund eines Schlüssels (K) ein Binärwort (p) durch eine Folge von Substitutionen und Permutationen in ein anderes Binärwort (c) zu verwandeln, wobei die Substitutionsoperationen mit Hilfe eines oder mehrerer programmierbarer oder umprogrammierbarer Speicher (2, 3, 4, 5) erfolgt, welche durch das gesamte zu substituierende Wort oder durch einen Teil davon und durch den gesamten Schlüssel oder durch einen Teil davon oder durch nacheinander angewandte Teile des Schlüssels adressiert werden, dadurch gekennzeichnet, daß die Einrichtung weiter Mittel aufweist, die es gestatten, die Einrichtung auch bei Wörtern mit einer Länge zu verwenden, welche geringer als die normalerweise vorgesehene Länge ist, indem das betreffende Wort durch Nullen vervollständigt wird, wobei mit Hilfe einer Anfangs- und Endpermutation ($T_0$) eine Verteilung dieser Nullen über die Binärelementpositionen herbeigeführt wird, die durch die Permutations- und Substitutionsoperationen beibehalten bleiben.

2. Einrichtung nach Anspruch 1, dadurch gekennzeichnet, daß die Permutationsoperation durch eine Beschaltung erreicht wird, die eine homogene Verteilung aller Binärelemente einer Eingangsgruppe über alle Ausgangsgruppen bewirkt.

3. Einrichtung nach einem beliebigen der Ansprüche 1 und 2, dadurch gekennzeichnet, das die Substitutionsspeicher aus Substitutionstabellen bestehen, die je ihrerseits einem gegebenen Wert des auf diesen Speicher angewandten Schlüssels entsprechen.

4. Einrichtung nach Anspruch 3, dadurch gekennzeichnet, daß jeder Substitutionsspeicher für jeden gegebenen Wert des auf diesen Speicher angewandten Schlüssels mehrere Substitutionstabellen aufweist, zwischen denen die Wahl durch eine zusätzliche Adressierung mittels eines Hilfsschlüssels ($C_0$, $C_1$) bewirkt wird.

5. Einrichtung nach Anspruch 4, dadurch gekennzeichnet, daß jeder Substitutionsspeicher für einen gegebenen Wert des auf diesen Speicher angewandten Schlüssels insbesondere zwei Substitutionstabellen aufweist, von denen eine den Substitutionsalgorithmus und die andere den dazu inversen Algorithmus liefert.

6. Einrichtung nach einem der Ansprüche 1 bis 5, dadurch gekennzeichnet, daß der Schlüssel in seiner Gesamtheit mehrmals im Zuge mehrerer aufeinanderfolgender Substitutions- und Permutationsfolgen angewandt wird.

7. Einrichtung nach Anspruch 6, dadurch gekennzeichnet die resultierende Folge eine Symmetrie besitzt.

8. Einrichtung nach Anspruch 2, dadurch gekennzeichnet, daß das der Beschaltung entsprechende Schema umkehrbar ist.

9. Einrichtung nach einem beliebigen der Ansprüche 1 bis 8, dadurch gekennzeichnet, daß die Substitutionsspeicher regellos geladen werden.

FIG_1

FIG_2

MEMOIRE DE CLE 7

MEMOIRE DE MOTS 10

9

11 Bits 1 à 8 MEMOIRES TAMPON

12 Bits 9 à 16

13 Bits 17 à 24 MEMOIRES TAMPON

14 Bits 25 à 32

1 CIRCUIT DE PERMUTATION INITIALE

16 MEMOIRE TAMPON

17 MEMOIRES TAMPON

18

19 MEMOIRE TAMPON

21 MEMOIRE TAMPON

20 MEMOIRE TAMPON

2 MEMOIRE DE SUBSTITUTION

3 MEMOIRE DE SUBSTITUTION

4 MEMOIRE DE SUBSTITUTION

5 MEMOIRE DE SUBSTITUTION

CIRCUIT DE PERMUTATION 6

8 CIRCUIT DE PERMUTATION FINALE

30

31

32 MEMOIRES TAMPON

33

EP 0 202 989 B1

FIG_3

# FIG_4

# FIG_5

# FIG_6

# FIG_7

# FIG_8

MEMOIRES TAMPON — 42, 43

MEMOIRES TAMPON — 46, 47, 48

MEMOIRES TAMPON — 44, 45

MEMOIRES TAMPON — 49, 50

MEMOIRE TAMPON — 51

MEMOIRE DE SUBSTITUTION — 52

CIRCUIT DE PERMUTATION

40

MEMOIRE DE MOTS ET DE CLE — 41

EP 0 202 989 B1